# FASCICULE DE BREVET EUROPEEN

(11) **EP 0 864 462 B1**
(45) Date de publication et mention de la délivrance du brevet: **13.02.2002**
(21) Numéro de dépôt: 98400556.1
(22) Date de dépôt: 10.03.1998
(51) Int. Cl.: B60Q 1/12

(54) **Système d'éclairage de véhicule automobile comportant au moins deux projecteurs à fonction virage**
Beleuchtungseinrichtung mit zwei Kurvenscheinwerfern
Lighting device for vehicle with two turn-headlamps

(30) Priorité: 13.03.1997 FR 9703002
(43) Date de publication de la demande: 16.09.1998
(73) Titulaire: VALEO VISION, 93000 Bobigny (FR)
(72) Inventeur: Prevost, André, 91540 Mennecy (FR); Leleve, Joel, 93800 Epinay sur Seine (FR)
(74) Mandataire: Le Forestier, Eric

(56) Documents cités:
- EP-A- 0 832 785
- CH-A- 130 815

## Description

La présente invention est relative à un système d'éclairage à fonction virage.

On rappelle que la fonction virage permet d'éclairer, lorsqu'un véhicule se déplace sur une trajectoire incurvée, les portions de route qui sont destinées à être abordées par le véhicule et qui se trouvent à l'avant et sur le côté de celui-ci.

Pour un projecteur d'émission de faisceau de type route, il est connu d'assurer la fonction virage en jouant sur l'orientation du réflecteur du projecteur.

Toutefois, cette solution n'est pas transposable à des éclairages proches de type code sur lesquels la rotation des faisceaux entraînerait des déréglages dans la projection au sol du faisceau qui seraient incompatibles avec la réglementation.

Un but de l'invention est de proposer un système d'éclairage qui permette de réaliser une fonction virage pour des éclairages proches.

On connaît déjà par CH 130 815 un montage permettant à un conducteur de faire varier l'intensité en sortie des phares de son véhicule ainsi que de faire varier l'inclinaison desdits phares.

Si le système décrit dans ce document permet d'éviter l'éblouissement des conducteurs lors du croisement des véhicules, il ne permet aucunement de réaliser une fonction virage pour des éclairages proches.

Il a été proposé - dans la demande de brevet EP 0 832 785 qui ne fait pas partie de l'état de la technique à prendre en compte pour apprécier l'activité inventive - un système d'éclairage pour véhicule automobile comportant au moins deux projecteurs du type antibrouillard pour l'émission de faisceaux de virage, ledit système d'éclairage comportant des moyens formant capteur aptes à générer une information relative au braquage des roues du véhicule et des moyens pour commander la puissance d'alimentation desdits projecteurs en fonction d'une information de braquage des roues du véhicule transmise par lesdits moyens formant capteur.

L'invention propose quant à elle un système d'éclairage pour véhicule automobile comportant au moins deux projecteurs du type antibrouillard, pour l'émission de faisceaux de virage, ledit système comportant des moyens formant capteur aptes à générer une information relative au braquage des roues du véhicule et des moyens pour commander la puissance d'alimentation desdits projecteurs en fonction d'une information de braquage des roues du véhicule transmise par lesdits moyens formant capteur, lesdits moyens de commande n'augmentant que la puissance d'alimentation du projecteur de virage qui est du côté vers lequel le véhicule tourne, de façon à accentuer l'éclairage de ce côté.

Ce système est avantageusement complété par les différentes caractéristiques suivantes, prises seules ou selon toutes leurs combinaisons techniquement possibles :
- les moyens de commande maintiennent les projecteurs de virage éteints tant que le braquage des roues du véhicule n'est pas supérieur à un seuil prédéterminé ;
- au delà du seuil de braquage de roues, les moyens de commande alimentent avec une puissance constante le projecteur de virage qui est du côté opposé à celui vers lequel le véhicule tourne ;
- les moyens de commande comportent des convertisseurs électroniques permettant d'alimenter temporairement en surpuissance le projecteur de virage qui est du côté vers lequel le véhicule tourne, pour améliorer l'éclairage lorsque le braquage des roues du véhicule devient fort ;
- les moyens de commande augmentent la puissance d'alimentation du projecteur de virage qui est du côté vers lequel le véhicule tourne, de façon progressive avec le braquage des roues du véhicule ;
- il comporte un capteur qui mesure la rotation de la colonne de direction du véhicule, ainsi qu'une unité de gestion qui reçoit en entrée des signaux correspondant aux mesures relevées par ledit capteur et qui commande la puissance d'alimentation des projecteurs de virage en fonction de ces mesures ;
- l'unité de gestion comporte des moyens pour le filtrage des mesures du capteur ;
- l'unité de gestion est constituée de moyens de calcul et d'un circuit de puissance.

D'autres caractéristiques et avantages de l'invention ressortiront encore de la description qui suit. Cette description est purement illustrative et non limitative. Elle doit être lue en regard des dessins annexés sur lesquels :
- la figure 1 et la figure 2 sont deux représentations schématiques d'un système d'éclairage conforme à un mode de réalisation possible de l'invention;
- la figure 3 est une représentation schématique qui illustre une mise en oeuvre possible de la fonction virage avec un système du type de ceux illustrés sur les figures 1 et 2 ;
- la figure 4 est un graphe sur lequel on a porté la tension d'alimentation des projecteurs de fonction virage du système des figures 1 et 2 en fonction de l'angle de rotation du volant de son véhicule ;
- la figure 5 est un tableau de la répartition isolux de l'éclairement d'un projecteur anti-brouillard.

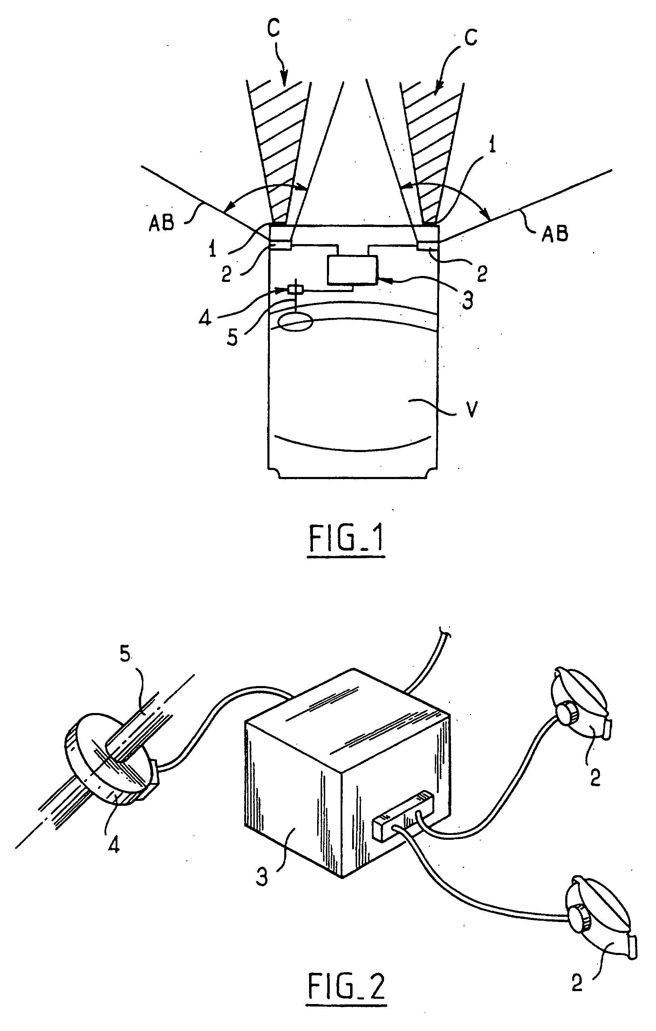

Le système d'éclairage illustré sur les figures 1 et 2 comporte deux projecteurs 1 d'émission de faisceaux proches (projecteurs code) et deux projecteurs 2 d'éclairage latéral, qui sont disposés à l'avant d'un véhicule V, de chaque côté de celui-ci et qui sont fixes par rapport audit véhicule.

Les projecteurs 2 sont avantageusement des projecteurs à coupure droite (projecteurs antibrouillards). Le système d'éclairage comporte bien entendu également des projecteurs de faisceaux lointains de type route, dont les réflecteurs sont par exemple disposés dans un même boîtier que les réflecteurs des projecteurs de faisceaux codes.

Sur la figure 1, les faisceaux émis par les projecteurs 2 ont été référencés par AB, ceux émis par les projecteurs code par C.

Les deux projecteurs 2 sont reliés à une unité de gestion 3 qui commande leur alimentation en fonction d'informations relatives au braquage des roues du véhicule qui lui sont fournies par un capteur 4 qui suit les rotations de la colonne de direction 5 du volant.

L'alimentation de l'unité de gestion 3 - et des projecteurs 2 via ladite unité 3 - est par exemple assurée par l'alimentation des projecteurs 1 de faisceaux codes. Toutefois, dans ce cas, la fonction virage n'est mise en oeuvre que lorsque les projecteurs codes sont allumés et n'est donc pas disponible pour les faisceaux routes.

En variante, l'unité de gestion 3 peut être directement reliée à une borne d'alimentation à la tension de la batterie et recevoir comme signaux d'entrée les tensions d'alimentation des projecteurs code et des projecteurs route, de façon à commander la fonction virage et l'alimentation des projecteurs 2 lorsque soit les projecteurs code, soit les projecteurs route sont allumés.

L'unité de gestion 3 comporte des moyens de calcul qui mettent en oeuvre un filtrage des mesures d'angles de rotation et qui déterminent, en fonction des mesures d'angles ainsi filtrées, les tensions d'alimentation qui doivent être délivrées aux projecteurs 2. Elle comporte également un circuit d'amplification qui génère les tensions d'alimentation des projecteurs en fonction de la sortie des moyens de calcul.

Les tensions de commande délivrées par l'unité 3 sont par exemple de type tout ou rien, les projecteurs 2 étant allumés lorsque l'angle volant devient supérieur à une valeur donnée. Pour respecter les contraintes réglementaires, les deux projecteurs 2 sont allumés ou éteints simultanément.

La valeur seuil au dessus de laquelle les projecteurs 2 sont allumés est choisie suffisante pour ne pas provoquer des séquences d'allumage et d'extinction trop fréquentes, qui pourraient gêner le conducteur.

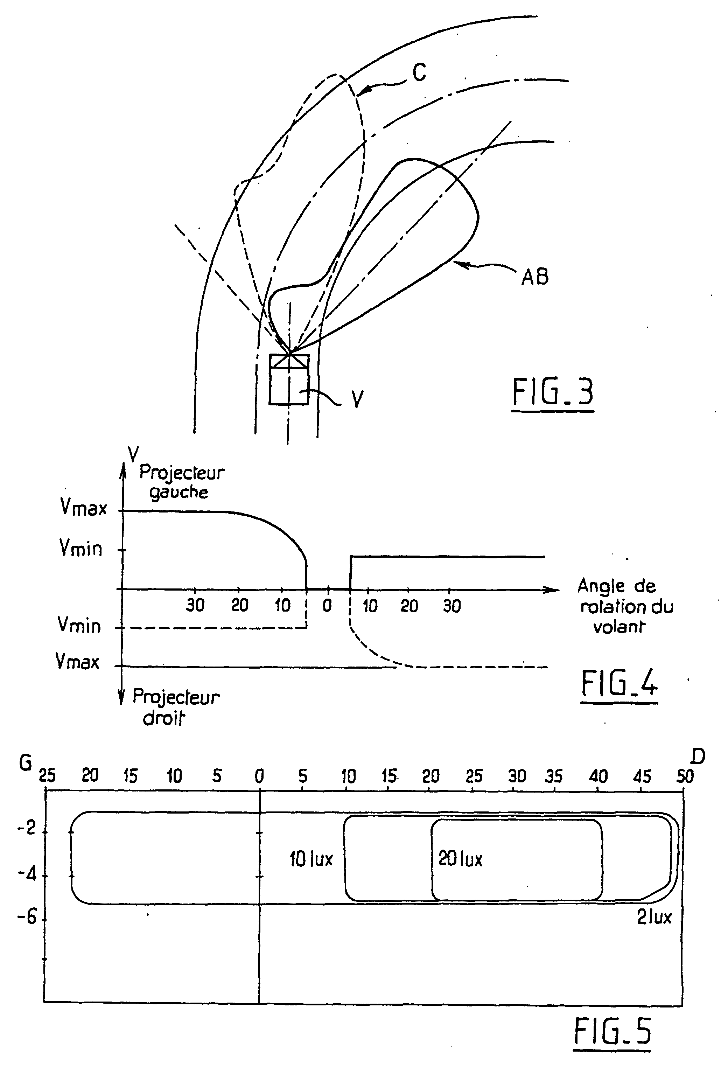

L'unité 3 commande l'un et l'autre des deux projecteurs 2 avec des tensions d'alimentation distinctes, de façon, ainsi qu'illustré sur la figure 3, à accentuer l'éclairage d'un côté ou de l'autre selon que le véhicule tourne à droite ou à gauche.

Dans l'exemple illustré sur la figure 3, le véhicule aborde une portion de route incurvée vers la droite et le projecteur 2 à l'avant-droit du véhicule est alimenté avec une tension supérieure à celle du projecteur 2 situé à l'avant-gauche du véhicule.

Un tel éclairage correspond par exemple à une loi de commande du type de celle illustrée sur la figure 4.

Sur le graphe représenté sur cette figure, on a porté en fonction de l'angle de rotation du volant, les tensions d'alimentation du projecteur 2 à l'avant-gauche du véhicule (en traits pleins) et du projecteur 2 à l'avant-droit du véhicule (en traits pointillés). Sur ce graphe, l'angle 0 correspond bien entendu à un braquage nul des roues du véhicule.

Selon cette loi de commande, tant que l'angle de rotation du volant est inférieur à un seuil donné (5° par exemple), les projecteurs 2 sont éteints.

Au-delà de cette valeur, le projecteur qui est du côté vers lequel le véhicule tourne est alimenté par une tension qui croît progressivement à partir d'une valeur Vₘᵢₙ minimale (8 à 9Volts par exemple) pour atteindre une valeur d'alimentation Vₘₐₓ maximale pour un angle de rotation de volant qui est par exemple de 30°. Le projecteur 2 qui est du côté opposé - c'est-à-dire celui qui est à l'extérieur du virage - est quant à lui alimenté à la tension minimale Vₘᵢₙ précitée.

La tension d'alimentation maximale est par exemple la tension de la batterie. On peut également prévoir que le circuit de puissance de l'unité 3 comporte des convertisseurs électroniques permettant de survolter temporairement le projecteur pour améliorer l'éclairage lorsque le braquage des roues du véhicule devient fort.

Le système d'éclairage qui vient d'être décrit présente de nombreux avantages.

Notamment, il permet de réaliser une fonction virage avec des moyens statiques et par conséquent sans nécessiter de mécanismes pour l'entraînement en rotation de réflecteurs ou même de projecteurs.

Egalement, il est d'un montage aisé. Notamment, des emplacements sont prévus sur la majorité des véhicules pour des projecteurs anti-brouillard. En outre, des capteurs de mesure de rotation de volant existent déjà sur certains véhicules, notamment sur les véhicules haut de gamme. Par ailleurs, l'unité de gestion - qui est constituée d'un calculateur et d'un étage de sortie de puissance - est techniquement d'une grande simplicité de réalisation.

## Revendications

1. Système d'éclairage pour véhicule automobile comportant au moins deux projecteurs (2) du type antibrouillard pour l'émission de faisceaux de virage, ledit systeme d'éclairage comportant des moyens formant capteur aptes à générer une information relative au braquage des roues du véhicule et des moyens (3, 4) pour commander la puissance d'alimentation desdits projecteurs en fonction d'une information de braquage des roues du véhicule transmise par lesdits moyens formant capteur, lesdits moyens de commande (3) n'augmentant que la puissance d'alimentation du projecteur de virage qui est du côté vers lequel le véhicule tourne.

2. Système d'éclairage selon la revendication 1, **caractérisé en ce que** les moyens de commande maintiennent les projecteurs de virage (2) éteints tant que le braquage des roues du véhicule n'est pas supérieur à un seuil prédéterminé.

3. Système d'éclairage selon la revendication 2, **caractérisé en ce qu'**au-delà du seuil de braquage de roues, les moyens de commande (3, 4) alimentent avec une puissance constante le projecteur de virage qui est du côté opposé à celui vers lequel le véhicule tourne.

4. Système d'éclairage selon la revendication 1, **caractérisé en ce que** les moyens de commande comportent des convertisseurs électroniques permettant d'alimenter temporairement en surpuissance le projecteur de virage qui est du côté vers lequel le véhicule tourne, pour améliorer l'éclairage lorsque le braquage des roues du véhicule devient fort.

5. Système d'éclairage selon l'une des revendications précédentes, **caractérisé en ce que** les moyens de commande (3) augmentent la puissance d'alimentation du projecteur de virage qui est du côté vers lequel le véhicule tourne, de façon progressive avec le braquage des roues du véhicule.

6. Système d'éclairage selon l'une des revendications précédentes, **caractérisé en ce qu'**il comporte un capteur (4) qui mesure la rotation de la colonne de direction du véhicule, ainsi qu'une unité de gestion (3) qui reçoit en entrée des signaux correspondant aux mesures relevées par ledit capteur (4) et qui commande la puissance d'alimentation des projecteurs de virage (2) en fonction de ces mesures.

7. Système d'éclairage selon la revendication 6, **caractérisé en ce que** l'unité de gestion (3) comporte des moyens pour le filtrage des mesures du capteur.

8. Système d'éclairage selon l'une des revendications 6 ou 7, **caractérisé en ce que** l'unité de gestion (3) est constituée de moyens de calcul et d'un circuit de puissance.

## Claims

1. Lighting system for a motor vehicle having at least two headlights (2) of the fog type for emitting beams on a curve, the said lighting system having means forming a sensor able to generate information relating to the lock on the vehicle wheels and the means (3, 4) for controlling the supply of power to the said headlights as a function of lock information on the vehicle wheels transmitted by the said means forming a sensor, the said control means (3) increasing only the supply power of a headlight for curves which is on the side towards which the vehicle is turning.

2. Lighting system according to Claim 1, **characterised in that** the control means keep the headlights for curves (2) off as long as the lock on the vehicle wheels is not greater than a predetermined threshold.

3. Lighting system according to Claim 2, **characterised in that**, beyond the wheel lock threshold, the control means (3, 4) supply, with a constant power, the headlight for curves which is on the side opposite to the one to which the vehicle is turning.

4. Lighting system according to Claim 1, **characterised in that** the control means have electronic converters for temporary supplying with overpower the headlight for curves which is on the side towards which the vehicle is turning, in order to improve the lighting when the lock on the vehicle wheels becomes great.

5. Lighting system according to one of the preceding claims, **characterised in that** the control means (3) increase the supply power of the headlight for curves which is on the side towards which the vehicle is turning, progressively with the lock on the vehicle wheels.

6. Lighting system according to one of the preceding claims, **characterised in that** it includes a sensor (4) which measures the rotation of the vehicle steering column, and a management unit (3) which receives as an input signals corresponding to the measurements made by the said sensor (4) and which controls the supply power to the headlights for curves (2) according to these measurements.

7. Lighting system according to Claim 6, **characterised in that** the management unit (3) has means for filtering the measurements from the sensor.

8. Lighting system according to one of Claims 6 or 7, **characterised in that** the management unit (3) consists of calculation means and a power circuit.

## Patentansprüche

1. Beleuchtungssystem für Kraftfahrzeuge mit wenigstens zwei Scheinwerfern (2) des Typs Nebelscheinwerfer zur Abgabe von Kurvenlichtbündeln, wobei dieses Beleuchtungssystem Mittel umfaßt, die einen Sensor bilden, der eine Information hinsichtlich des Einschlags der Fahrzeugräder zu erzeugen vermag, sowie Mittel (3, 4) zur Steuerung der Leistungsaufnahme der Scheinwerfer in Abhängigkeit von einer Information über den Einschlag der Fahrzeugräder, die von den den Sensor bildenden Mitteln übermittelt wird, wobei die Steuerungsmittel (3) nur die Leistungsaufnahme desjenigen Kurvenscheinwerfers erhöht, der sich auf der Seite befindet, zu der das Fahrzeug abbiegt.

2. Beleuchtungssystem nach Anspruch 1,
**dadurch gekennzeichnet, daß** die Steuerungsmittel die Kurvenscheinwerfer (2) ausgeschaltet lassen, solange der Einschlag der Fahrzeugräder einen vorgegebenen Grenzwert nicht überschreitet.

3. Beleuchtungssystem nach Anspruch 2,
**dadurch gekennzeichnet, daß** jenseits des für den Einschlag der Räder festgelegten Grenzwerts die Steuerungsmittel (3, 4) denjenigen Kurvenscheinwerfer mit einer konstanten Leistung speisen, der sich auf der der Abbiegungsrichtung des Fahrzeugs entgegengesetzten Seite befindet.

4. Beleuchtungssystem nach Anspruch 1,
**dadurch gekennzeichnet, daß** die Steuerungsmittel elektronische Wandler aufweisen, die es erlauben, denjenigen Kurvenscheinwerfer, der sich auf der Seite befindet, zu der das Fahrzeug abbiegt, zeitweise mit höherer Leistung zu versorgen, um die Beleuchtung bei starkem Einschlag der Fahrzeugräder zu verbessern.

5. Beleuchtungssystem nach einem der vorhergehenden Ansprüche,
**dadurch gekennzeichnet, daß** die Steuerungsmittel (3) die Leistungsaufnahme desjenigen Kurvenscheinwerfers, der sich auf der Seite befindet, zu der das Fahrzeug abbiegt, mit dem Einschlag der Fahrzeugräder allmählich erhöht.

6. Beleuchtungssystem nach einem der vorhergehenden Ansprüche,
**dadurch gekennzeichnet, daß** es einen Sensor (4) umfaßt, der die Drehung der Lenksäule mißt, sowie eine Steuereinheit (3), die Eingangssignale empfängt, die den vom Sensor (4) erfaßten Meßwerten entsprechen, und die die Leistungsaufnahme der Kurvenscheinwerfer (2) in Abhängigkeit von diesen Meßwerten steuert.

7. Beleuchtungssystem nach Anspruch 6,
**dadurch gekennzeichnet, daß** die Steuereinheit (3) Mittel zum Filtern der Sensormeßwerte umfaßt.

8. Beleuchtungssystem nach einem der Ansprüche 6 oder 7,
**dadurch gekennzeichnet, daß** die Steuereinheit (3) aus Berechnungsmitteln und einem Stromkreis besteht.
